Europäisches Patentamt

**European Patent Office** (11) Numéro de publication: **0 042 792**

Office européen des brevets **A1**

(12) **DEMANDE DE BREVET EUROPEEN**

(21) Numéro de dépôt: **81400976.7**

(22) Date de dépôt: **18.06.81**

(51) Int. Cl.³: **B 01 J 19/00**
**C 07 C 103/52**

(30) Priorité: **23.06.80 FR 8013894**

(43) Date de publication de la demande:
**30.12.81 Bulletin 81/52**

(84) Etats contractants désignés:
**AT BE CH DE FR GB IT LI LU NL SE**

(71) Demandeur: **SANOFI, société anonyme**
**40, Avenue George V**
**F-75008 Paris(FR)**

(72) Inventeur: **Castro, Bertrand**
**89 rue du Général Leclerc**
**F-54 850 Messein(FR)**

(72) Inventeur: **Didelon, Jacques**
**Belleau**
**F-54 610 Nomeny(FR)**

(72) Inventeur: **Masson, Jacques**
**17 rue Hardillon**
**F-54 390 Frouard(FR)**

(72) Inventeur: **Rivaille, Pierre**
**28 rue du Petit-Musc**
**F-75004 Paris(FR)**

(72) Inventeur: **Tosser, André**
**17 rue Emile Bertin**
**F-54000 Nancy(FR)**

(74) Mandataire: **Combe, André et al,**
**CABINET BEAU DE LOMENIE 55 rue d'Amsterdam**
**F-75008 Paris(FR)**

(54) Appareillage automatisé utilisable pour la synthèse des peptides en phase solide.

㊐ La présente invention concerne un appareil automatisé utilisable pour la synthèse des peptides en phase solide, caractérisé en ce qu'il est prévu pour ne réaliser que les opérations de lavage et de déblocage qui sont programmées au moyen d'une électronique souple et fiable et qu'il utilise un réacteur comportant les éléments caractérisques suivants:
- un volume limité par deux verres frittes (4) et (7)
- deux petites chambres (5) et (9) dans lesquelles on peut détecter des niveaux de liquides.
-des moyens pour agiter ledit réacteur par basculement.

Fig-1

Croydon Printing Company Ltd.

Appareillage automatisé utilisable pour la synthèse des peptides en phase solide.

La présente invention concerne un nouvel appareillage automatisé utilisable pour la synthèse des peptides en phase solide.

La synthèse des peptides en phase solide consiste à effectuer l'introduction séquentielle des aminoacides successifs sur un fragment peptidique qui est greffé sur un polymère généralement styrénique insoluble dans les conditions opératoires utilisées. A chaque stade, cette synthèse comporte donc une opération de greffage (couplage) suivie d'opérations impliquant d'une part des lavages et d'autre part le déblocage de l'extrémité de la chaîne polypeptidique.

Une telle synthèse par son côté répétitif se prête à l'automatisation et un certain nombre d'appareils automatisés ont été décrits. Cependant, les appareils automatisés actuellement existants présentent des inconvénients dont les principaux sont les suivants :

_ pertes de solutions d'aminoacides lors des stockages nécessaires de ces produits.

- cellule(s) de mesure séparée(s) du réacteur,

- dénaturation des agents de couplage en solution

- programmes de lavage trop standardisés

- mobilisation de l'appareil pendant toute la synthèse, alors que les opérations à effectuer impliquent des durées différentes

- agitation inadaptée par agitateur interne

- coût très élevé.

La présente invention vise un appareil automatisé de synthèse peptidique en phase solide surmontant les divers inconvénients des appareils actuellement connus.

L'appareil selon l'invention est fondé sur les remarques suivantes :

a) dans la synthèse des peptides en phase solide, l'opération de greffage d'une part et les opérations de lavage et de déblocage d'autre part sont de natures différentes, de telle sorte qu'il est apparu souhaitable qu'elles soient réalisées sur des appareils différents. La bonne "gestion" d'une automatisation apparaît comme passant par le fractionnement de l'appareillage. La présente invention concernera donc un appareil automatisé réalisant les opérations de lavage et de déblocage,

b) par contre, compte tenu des fonctions limitées assignées à l'appareil selon l'invention, il est souhaitable de disposer d'un programme automatisé très souple. En conséquence, une des caractéristiques de l'appareil mis au point sera de comporter des dispositifs électroniques - connus en eux-mêmes ou réalisables par un spécialiste en la matière - qui permettront de programmer individuellement chacune des opérations à effectuer et, bien entendu, la séquence desdites opérations,

c) enfin, il a été trouvé indispensable de disposer d'un réacteur présentant des caractéristiques précises qui sont :

- le réacteur à un volume déterminé par deux niveaux matérialisés par deux verres frittés,

- l'arrivée et la sortie d'un liquide dans le réacteur sont détectés par deux détecteurs (niveau haut et niveau bas) utilisant de préférence une détection par rayonnement et cellule infrarouge et étant situés en haut et en bas du réacteur au niveau de deux petites chambres de détection,

- une striction existe entre le verre fritté inférieur et la chambre de détection (dite aussi chambre de mesure) inférieure.

Par ailleurs, l'arrivée et le départ des réactifs liquides sont réalisés de manière connue par branchement de tuyaux souples permettant l'utilisation, sur un même appareil, de réacteurs de volumes différents mais de préférence de même hauteur ; de plus, l'arrivée et le départ des liquides sont réalisés par la partie basse du réacteur afin d'éviter tout colmatage des filtres ; enfin, l'agitation du réacteur se fait par retournement de celui-ci, à fréquence et amplitude compatibles avec le matériau à homogénéiser.

L'appareil selon l'invention, directement issu de l'application des remarques précédentes, est donc caractérisé :

- par le fait qu'il ne concerne que les opérations de lavage et de déblocage

- par le fait que l'électronique d'automatisation permet de programmer de façon flexible et fiable chacune des opérations et la séquence desdites opérations

- par le fait que le réacteur comporte les caractéristiques mentionnées ci-dessus.

Des exemples non limitatifs mais préférés de réalisations de l'invention sont illustrés sur les figures 1,2,3 4 et 5. La figure 1 représente, en coupe un réacteur selon l'invention; la figure 2 représente schématiquement un dispositif d'agitation du réacteur, par retournement, le dispositif de fixation dudit eéacteur sur la machine à agiter étant représenté sur la figure 3 ; la figure 4 représente une variante encore préférée du dispositif d'agitation du réacteur ; la figure 5 représente une table de commande électronique d'automatisation.

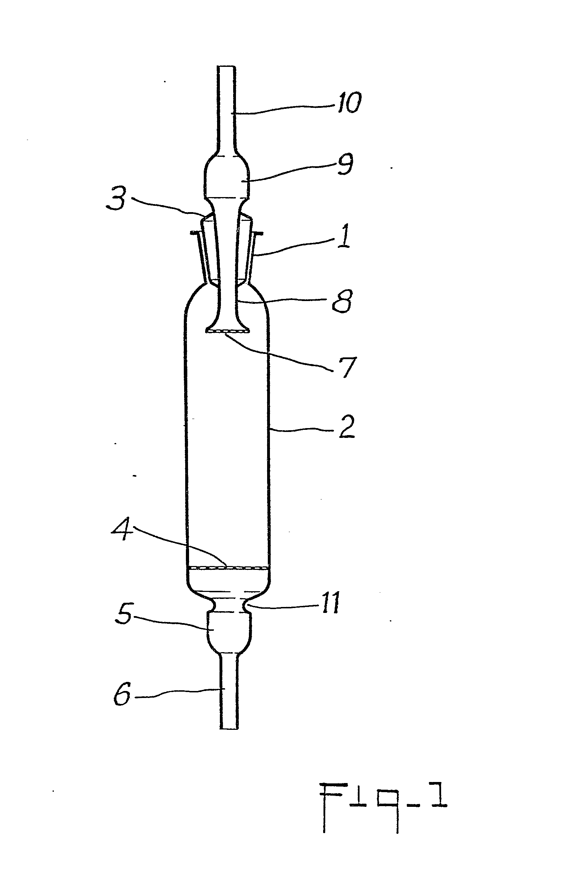

La figure 1 représente, en coupe, un réacteur selon l'invention. Ce réacteur est constitué par l'assemblage, au moyen d'un rodage 1, de deux parties, à savoir : le réacteur proprement dit 2 et la partie supérieure du réacteur 3.

Le réacteur proprement dit comporte, à sa partie inférieure, un verre fritté 4 (de porosité 2 de préférence) et, au-dessous de ce verre fritté, un bulbe 5 formant "chambre de détection"; entre le verre fritté 4 et le bulbe 5, la partie basse du réacteur a une forme convenable, de façon à permettre un écoulement régulier du liquide dans le bulbe, malgré la perturbation apportée à cet écoulement par le verre fritté. On notera en particulier la striction 11, qui est indispensable pour casser les mousses, en raison de l'intégration des chambres de détection dans le réacteur même.

Au-dessous du bulbe, se trouve un tube 6, que l'on peut brancher sur un tuyau souple relié à l'appareil, par lequel s'effectuent l'arrivée et le départ des réactifs dans le réacteur.

La partie supérieure du réacteur comporte également un verre fritté 7 (de porosité 2 de préférence) situé à l'extrémité d'un petit tube 8. Ce tube 8 a une longueur variable selon les diverses "parties supérieures" utilisables pour un même réacteur, étant entendu :

- d'une part, que cette longueur est généralement non nulle, de façon à ménager, entre le verre fritté 7 et le haut du réacteur (rodage) une chambre coulissant de l'air qui permettra une agitation efficace du mélange contenu dans le réacteur par simple basculement dudit tube,

- d'autre part, que, par variation de la longueur du tube 8 plongeant dans le réacteur 2, on pourra modifier la quantité de réactif introduite dans ledit réacteur.

La partie supérieure du tube 8 débouche dans un bulbe 9 formant chambre de détection ; l'extrémité haute de cette chambre de détection est pourvue d'un tube 10 qui peut servir à assurer le mouvement des fluides dans la mesure où, par l'intermédiaire de ce tube et d'un tuyau souple qui y est branché, on peut faire le vide ou, au contraire, admettre une certaine pression.

Les deux chambres de détection 5 et 9 sont respectivement placées sur le trajet de deux rayonnements infrarouges que l'on reçoit sur des récepteurs, chaque rayonnement infrarouge détectant le changement provoqué par l'existence d'une part, et l'absence, d'autre part, de liquide sur ledit trajet. Le réacteur selon l'invention étant de préférence cylindrique, on placera l'émetteur et le récepteur de rayonnement selon, non pas un diamètre, mais une corde de la section circulaire dudit réacteur ; ainsi, en présence de liquide, il se produira une diffraction du faisceau émis et le récepteur cessera de recevoir le rayonnement.

L'alimentation du réacteur en liquide et l'évacuation de ce liquide s'effectuent par le tube 6.

Bien évidemment, ce tube 6 est relié, par une série de vannes multiples, aux flacons de réactifs et aux "poubelles", la commande desdites vannes étant assurée par le programmateur.

Par rapport aux systèmes connus, le réacteur selon l'invention permet d'interchanger en une seule opération, très simple, à la fois le réacteur et les cellules de mesure. Dans les systèmes antérieurs, plusieurs opérations étaient nécessaires, et compliquées.

Cet avantage essentiel est dû au fait que, pour la première fois, on est parvenu à intégrer les cellules de mesure (chambres de détection) au réacteur.

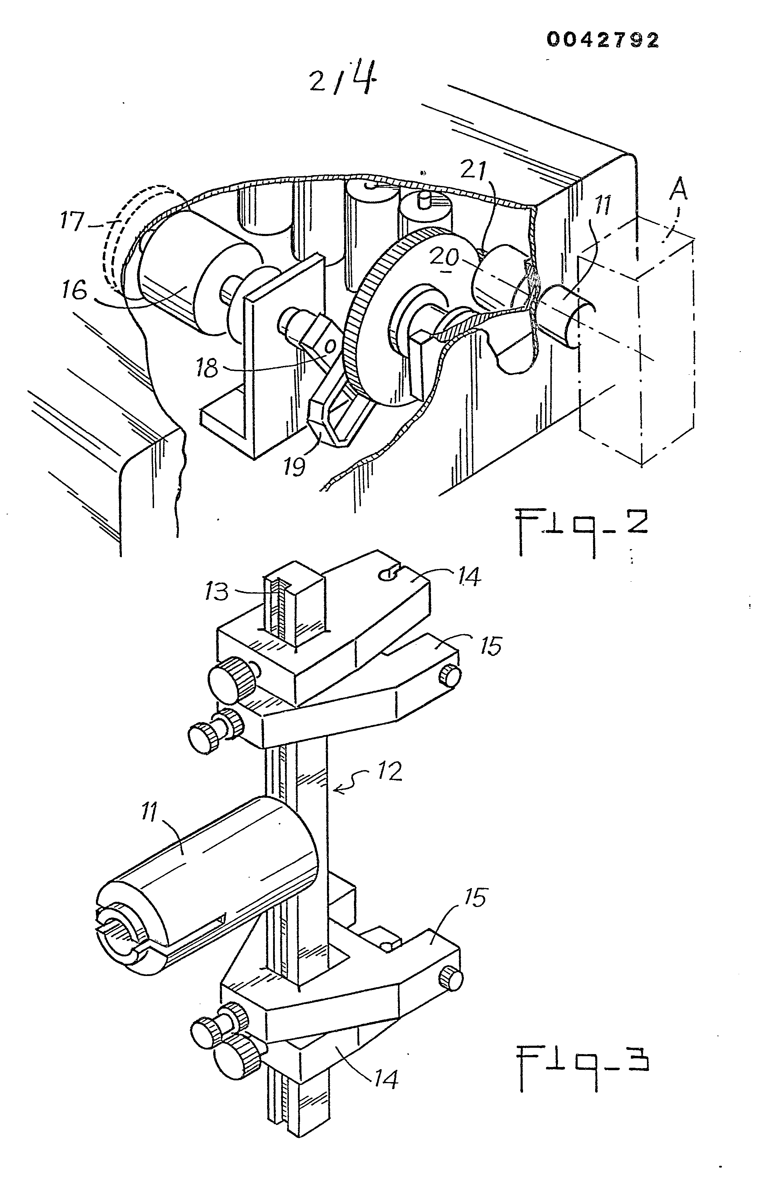

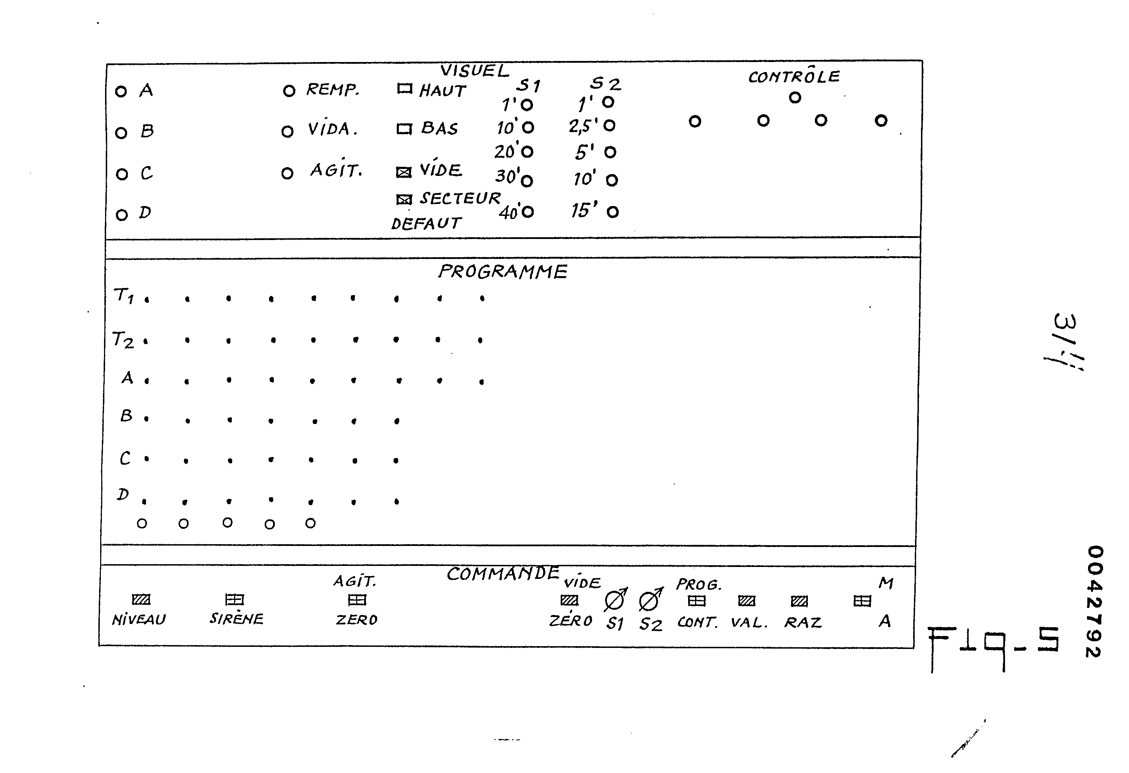

Le réacteur est maintenu en place par tout système mécanique connu qui permet, lorsque le réacteur est plein de liquide, d'agiter ledit réacteur par un mouvement de approprié : un tel système mécanique est représenté sur la figure 3.

Ce système mécanique de fixation du réacteur (A) est constitué essentiellement :

- d'un axe creux 11 solidaire du dispositif d'agitation qui sera décrit ultérieurement ; le trou de cet axe est avantageusement utilisé pour le passage des tubes souples qui amènent les fluides depuis les réserves de fluides (non représentées) jusqu'au réacteur (tubes 6 et 10) ; ce trou est également utilisé pour le passage des câbles nécessaires pour le fonctionnement des cellules qui commandent, au niveau des chambres de détection 5 et 9, le mouvement des liquides dans le réacteur ;

- d'une tige carrée 12 fixée à l'extrémité dudit axe creux ; cette tige carrée est pourvue d'une rainure 13 ;
Grâce à cette tige on fixe de part et d'autre de l'axe creux 11 d'une part deux supports de réacteur 14-14 qui ont pour fonction de maintenir le réacteur en place notamment lors des opérations de remplissage et d'agitation et d'autre part des éléments en forme de fourche 15-15 qui portent les cellules photoélectriques utilisées lors du remplissage et du vidage du réacteur.

L'agitation du réacteur, maintenu par le système mécanique décrit ci-dessus, est assurée par le dispositif représenté schématiquement sur la figure 2. Ce dispositif d'agitation présente les particularités suivantes : il réalise l'agitation du mélange contenu dans le réacteur par retournement dudit réacteur ; ce retournement est effectué a une vitesse réglable de façon à pouvoir faire en sorte que les particules présentes dans le mélange ne restent pas collées à la paroi du réacteur ; ce retournement s'effectue de préférence de façon asymétrique comme cela sera décrit ci-après.

Le dispositif d'agitation de la figure 2 comporte :

- en 16 un moteur électrique ; on utilisera de préférence un moteur à courant continu alimenté sous 24 V, tournant à 3000 tr/min au maximum et dont la vitesse peut être réglée entre 800 tr/min et 3000 tr/min :

- en 17 un volant à inertie ; ce volant, monté en bout du moteur 16, a pour fonction d'une part de régulariser la vitesse de rotation du moteur lorsque celui-ci est soumis à certains efforts et d'autre part de pouvoir être muni d'un frein (non représenté) qui permettra un arrêt contrôlé du moteur ; cet arrêt contrôlé est nécessaire de façon que le réacteur soit toujours arrêté en position verticale, le verre fritté 4 (figure 1) étant situé en position basse ;

- à l'autre bout du moteur est situé un réducteur qui réduit d'environ 200 fois la vitesse de rotation ; l'axe sortant de ce réducteur aura donc une vitesse de rotation d'environ 1 à environ 15 tr/min ;

- l'arbre sortant du réducteur entraîne une manivelle 18 ; l'autre extrémité de cette manivelle (celle qui n'est pas fixée à l'arbre du réducteur) comporte un roulement à bille fixé sur un petit axe perpendiculaire au plan de cette manivelle ; ce roulement à bille est engagé et coulisse dans une lumière ménagée dans une pièce 19 qui est fixée, à l'une de ses extrémités, au centre d'une roue dentée 20 ; lorsque le moteur 16 tourne, le dispositif décrit a pour conséquence d'entraîner la roue dentée 20 dans un mouvement alternatif particulier ;

- la roue dentée 20 attaque une autre roue dentée 21, plus petite que 20, dont l'axe entraîne le système mécanique de fixation du réacteur tel que décrit sur la figure 3 ; le rapport des diamètres des roues 20 et 21 est choisi de façon que la roue dentée 21 tourne d'un tour complet dans l'un et l'autre sens ; le mouvement alternatif obtenu par le dispositif d'agitation décrit est asymétrique en ce sens que d'une part les vitesses de rotation varient constamment au cours d'une même rotation et que d'autre part la vitesse moyenne de rotation dans un sens est différente de la vitesse moyenne de rotation dans l'autre sens.

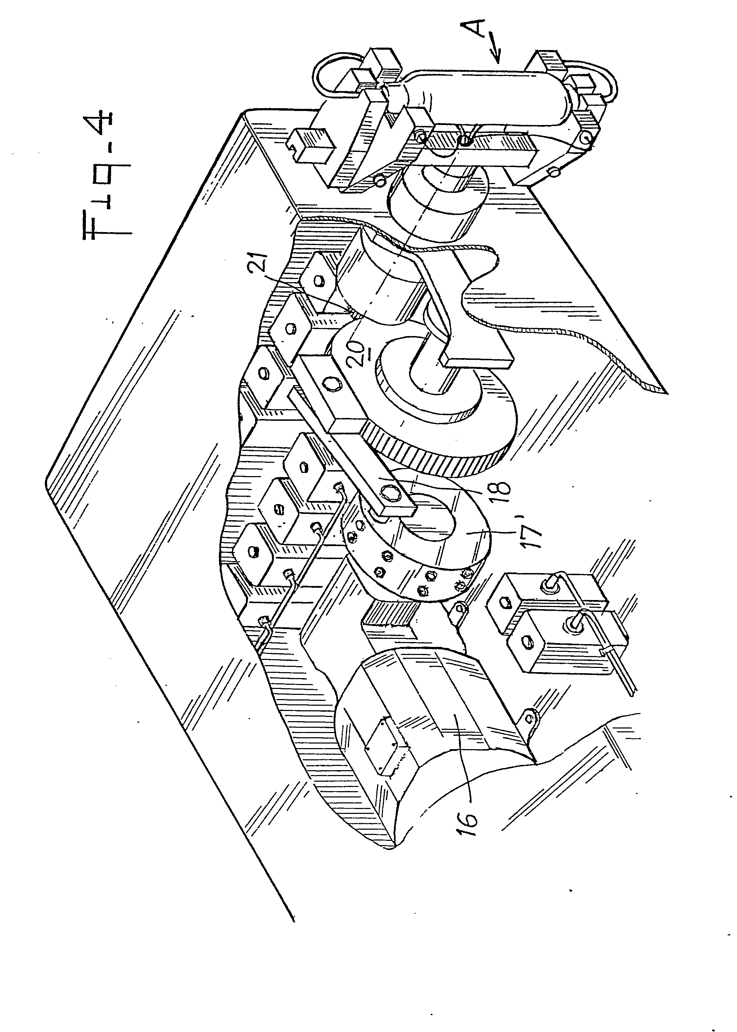

La figure 4 représente un autre dispositif d'agitation, préféré en raison de sa plus grande simplicité.

Sur cette figure 4 , les mêmes références ont le même sens que sur la figure 2, et le fonctionnement est identique à celui du premier dispositif décrit ci-dessus. Cependant, le volant à inertie 17 a été supprimé, et le moteur 16 entraine la manivelle 18 par l'intermédiaire d'un limiteur de couple 17' qui évite tout dommage en cas de blocage intempestif.

La manivelle 18 entraine directement la roue dentée 20 qui est donc animée d'un mouvement qui n'est plus particularisé comme dans le mode de réalisation précédent. Une plaquette métallique non représentée est fixée sur le limiteur de couple : en liaison avec une cellule photoélectrique, ce dispositif permet de stopper le réacteur en position verticale correcte.

Selon d'autres variantes, on peut prévoir des pointes de vigreux au-dessus du verre fritté 4 inférieur pour favoriser la mise en suspension du produit solide. On peut également remplacer le rodage 1 par un joint synthétique du type SVL 22 notamment.

La figure 5 représente un schéma de la table de commande du tableau électronique d'automatisation de l'appareil.

Sur cette table de commande, on peut programmer, par diode enfichable (ou tout moyen équivalent), la séquence des divers traitements (lavages et déblocage) et la durée de chacun de ces traitements.

Les conditions opératoires de chaque traitement correspondent à une colonne de la table de commande. Cette colonne parmettra ainsi :

- par le choix du point de connexion $T_1$ ou $T_2$ de déterminer la durée de base du traitement, la durée effective étant obtenue par action sur les sélecteurs $S_1$ et $S_2$ correspondants
- par le choix de la connexion A, B, C ou D de déterminer le solvant à utiliser.

En "remplissant" ainsi les colonnes successives du tableau, on pourra bâtir un programme comportant un nombre de traitements successifs au plus égal au nombre de colonnes dont la table est pourvue.

Pour ce qui concerne les durées des traitements, on peut sélectionner, grâce aux sélecteurs $S_1$ ou $S_2$, des durées qui seront des multiples du temps de base. Celui-ci peut être par exemple 2,5 minutes. Mais, on dispose en outre d'un temps imposé minimal, qui peut être par exemple de 1 minute, et qui sera utilisé chaque fois que, pour un traitement déterminé, aucune durée n'aura été affichée.

L'appareillage électronique comportera également de façon avantageuse des moyens, connus en eux-mêmes, pour détecter les éventuelles incompatibilités séquentielles des traitements successifs ainsi que les éventuelles erreurs de programmation. Cela implique que l'on aura affecté, à chaque ligne du tableau correspondant à un solvant, un solvant à caractéristique donnée et que l'on aura pu ainsi déterminer au préalable les incompatibilités de traitement en fonction desdits solvants. De plus, au moment où surviendront ces incompatibilités, le déroulement du programme sera automatiquement arrêté. L'appareillage électronique comportera avantageusement d'autres dispositifs de sûreté et/ou d'alarme qui provoqueront l'arrêt du déroulement du cycle de traitements et éventuellement la vidange automatique du réacteur. Ces autres dispositifs, en eux-mêmes connus, seront par exemple mis en oeuvre par :

- un remplissage incomplet du réacteur,
- une absence de vide (ou de pression de gaz inerte) et
- une panne de courant électrique (on notera à ce sujet que l'appareil selon l'invention peut être avantageusement alimenté à l'aide d'une batterie de 24 V dont la charge permanente est assurée et qui rend l'appareil insensible à une coupure temporaire normale du courant électrique du secteur).

Enfin, l'appareil électronique comportera de préférence des dispositifs de visualisation de chacun des traitements programmés; ainsi, l'opérateur pourra, par exemple avant le début du programme, tester en accéléré ce programme afin d'en faire apparaître les éventuelles erreurs et, en cours de déroulement du programme, connaître exactement le traitement en cours.

Sur la figure 5, on a matérialisé schématiquement une réalisation possible du tableau de commande; ce tableau se présente en trois parties, à savoir :

- une partie haute qui comporte tous les éléments de visualisation
- une partie intermédiaire qui comporte le tableau d'enfichage pour la commande matérielle du programme
- un tableau inférieur dans lequel est rassemblé le déclenchement manuel des diverses opérations ou d'une séquence d'entre elles.

REVENDICATIONS

1.       Appareil automatisé utilisable pour la la synthèse des peptides en phase solide dans lequel l'arrivée et le départ des réactifs liquides sont réalisés à la partie basse du réacteur - en position de remplissage et de vidage - grâce à un tuyau souple venant se brancher sur ledit réacteur, un autre tuyau souple venant se brancher à l'autre extrémité du réacteur permet d'assurer les autres conditions opératoires à l'intérieur de ce réacteur et permet d'évacuer les excédents de liquide, et l'agitation du réacteur est réalisée par basculement, caractérisé en ce qu'il est prévu pour ne réaliser que les opérations de lavage et de déblocage qui sont programmées au moyen d'une électronique souple et fiable et qu'il utilise un réacteur comportant les éléments caractéristiques suivants :

- ledit réacteur a un volume déterminé par deux niveaux matérialisés par deux verres frittés,

- l'arrivée et la sortie de liquide dans le réacteur sont détectées par deux détecteurs utilisant une détection (connue) par rayonnement et cellule infrarouge, lesdits détecteurs étant situés aux deux extrémités du réacteur au niveau de deux petites chambres de détection,

- une zone de striction de la section droite du réacteur existe entre le verre fritté inférieur et la partie supérieure de la chambre de détection inférieure.

2.       Appareil automatisé selon la revendication 1, caractérisé en ce que l'automatisation est réalisée grâce à un dispositif électronique permettant le choix de la durée de chaque traitement et du solvant à utiliser et permettant la programmation de la séquence des divers traitements (lavages et déblocage).

Fig. 1

21/4

*Fig-2*

*Fig-3*

VISUEL

O A    O REMP.    □ HAUT    S1    S2    CONTRÔLE

1' O    1' O

O B    O VIDA.    □ BAS    10' O    2,5' O    O   O   O   O

20' O    5' O

O C    O AGIT.    ⊠ VIDE    30' O    10' O

⊠ SECTEUR

O D    DEFAUT    40' O    15' O

PROGRAMME

$T_1$ · · · · · · · · ·

$T_2$ · · · · · · · · ·

A · · · · · · · · ·

B · · · · · · ·

C · · · · · · ·

D · · · · · · ·

O O O O O

COMMANDE

| NIVEAU | SIRÈNE | AGIT. ZERO | VIDE ZÉRO | S1 | S2 | PROG. CONT. | VAL. | RAZ | M A |
|--------|--------|-----------|-----------|----|----|------------|------|-----|-----|

Fig-4

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | B 01 J 19/00<br>C 07 C 103/52 |
| | <u>US - A - 3 531 258</u> (R.B. MERRIFIELD et al.)<br><br>* Colonne 1, lignes 13-26, 39-70; colonne 2, ligne 12 à colonne 3, ligne 22; colonne 3, lignes 46-60; colonne 5, ligne 64 à colonne 6, ligne 10; colonne 8, ligne 72 à colonne 10, ligne 28; revendications 1,4; figures 1,3 *<br>--- | 1,2 | |
| | <u>DE - A - 1 933 846</u> (SHIMADAN SEISAKUSHO Ltd.)<br><br>* Page 1, alinéa 1; page 7, alinéa 2 à page 12; revendications 1,7; figures 1 et 3 *<br>--- | 1,2 | DOMAINES TECHNIQUES RECHERCHES (Int. Cl.³)<br><br>B 01 J 19/00<br>C 07 C 103/52 |
| | <u>FR - A - 1 581 380</u> (THE DANISH INSTITUTE OF PROTEIN CHEMISTRY)<br><br>* Page 1, lignes 1-15; page 4, ligne 39 à page 10, ligne 5; résumé A; figure 2 *<br>--- | 1,2 | |
| A | <u>US - A - 3 715 190</u> (W.K. PARK et al.) | | |
| A | JOURNAL OF CHROMATOGRAPHIC SCIENCE, vol. 10, Juin 1972, ILLINOIS (US)<br>R.P.W. SCOTT et al.: "An Automatic Apparatus for the Synthesis of Peptides Using Resin Coated Glass Beads in the Form of a Packed Bed", pages 384-391<br><br>--------- | | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche<br>La Haye | Date d'achèvement de la recherche<br>17.09.1981 | Examinateur<br>PFANNERER |
|---|---|---|

OEB Form 1503.1 06.78